# EUROPEAN PATENT SPECIFICATION

(11) **EP 3 617 603 B1**
(45) Date of publication and mention of the grant of the patent: **12.10.2022**
(21) Application number: 18790191.3
(22) Date of filing: 05.02.2018
(51) Int. Cl.: F24F 1/00, F24F 13/30, F28F 1/32, F28F 13/18, F24F 11/41

(54) **AIR CONDITIONER**
KLIMAANLAGE
CLIMATISEUR

(30) Priority: 28.04.2017 JP 2017089948
(43) Date of publication of application: 04.03.2020
(73) Proprietor: Hitachi-Johnson Controls Air Conditioning, Inc., Tokyo 105-0022 (JP)
(72) Inventor: AKUTSU, Takashi, Tokyo 105-0022 (JP); TANAKA, Yukinori, Tokyo 105-0022 (JP); AWANO, Masakazu, Tokyo 105-0022 (JP); UEDA, Yoshiro, Tokyo 105-0022 (JP); YOSHIDA, Kazumasa, Tokyo 105-0022 (JP); NOTOYA, Yoshiaki, Tokyo 105-0022 (JP)
(74) Representative: MERH-IP Matias Erny Reichl Hoffmann Patentanwälte PartG mbB
(86) International application number: PCT/JP2018/003819
(87) International publication number: WO 2018/198468

(56) References cited:
- WO-A1-2009/130764
- WO-A1-2011/096124
- JP-A- S63 194 194
- JP-A- 2002 071 289
- JP-A- 2010 014 288
- JP-A- 2011 043 251
- JP-A- 2014 130 000
- JP-A- 2016 020 757
- US-A1- 2012 175 101

## Description

### TECHNICAL FIELD

The present invention relates to an air conditioner.

### BACKGROUND ART

An indoor unit of an air conditioner conditions the air in a room by sucking indoor air into the indoor unit, allowing the sucked indoor air to pass through a heat exchanger to obtain conditioned air having been subjected to any optional treatment of heating, cooling, and dehumidifying, and blowing the obtained conditioned air into the room (for example, see Patent Document 1).

The indoor unit of the air conditioner includes a filter placed in such a manner as to block between an air suction port for sucking indoor air and the heat exchanger in order to prevent dust particles contained in the indoor air from intruding into the indoor unit, and traps most of the dust particles by the filter. However, dust particles finer than the mesh of the filter intrude into the indoor unit through the mesh of the filter.

Inside the indoor unit, friction occurring when the suctioned indoor air collides with the heat exchanger causes static electricity to be generated around the heat exchanger. Also, fine dust particles having intruded into the indoor unit often contain oil content. Therefore, the dust particles having intruded into the indoor unit adhere to the heat exchanger by the static electricity and oil content.

The dust particles adhering to the heat exchanger contain a component which serves as a nutrient for bacteria (including mold). Then, for example, when the air conditioner performs cooling operation or dehumidifying operation during a summer season, moisture in air is condensed as dew on the surface of a fin of the heat exchanger, thereby causing the surroundings of the heat exchanger to become a high humidity state. Accordingly, when dust particles continuously adhere to the heat exchanger, bacteria (including mold) grow, which sometimes leads to the occurrence of an unpleasant odor. Therefore, it is desired that the air conditioner remove the dust particles adhering to the heat exchanger such that the heat exchanger is maintained clean throughout a year. Patent Document 2 discloses a fin member for a heat exchanger upon which the preamble of claim 1 is based, made of aluminum, which is reformed into a flat sheet and water repellent films are formed locally on the surface of the flat fin member. Patent Document 3 discloses a refrigeration cycle device, which is configured by sequentially connecting a compressor, a heat source side heat exchanger, an expansion device and a utilization side heat exchanger by refrigerant piping. Patent Document 4 discloses a fin and a tube heat exchanger, which is formed by laminating a plurality of fins composed of an aluminum alloy plate, wherein heat transfer tubes extend through the fins. Patent Document 5 discloses a fin tube heat exchanger, which includes fins and a heat transfer tube penetrating through the fins.

### CITATION LIST

### PATENT DOCUMENT

Patent Document 1: JP-A-2010-17662
Patent Document 2: JP S63 194194 A
Patent Document 3: JP 2016 020757 A
Patent Document 4: WO 2011/096124 A1
Patent Document 5: US 2012/175101 A1

### SUMMARY OF THE INVENTION

### PROBLEMS TO BE SOLVED BY THE INVENTION

However, known air conditioners have been desired to improve the maintenance properties of the heat exchanger.

For example, with known air conditioners, a user needed to wash the heat exchanger with a commercially available washing liquid, or a user needed to hire a cleaning company for cleaning the heat exchanger.

Also, for example, with known air conditioners, high-place work was required during washing work of the heat exchanger, thereby putting a burden on the worker. Here, examples of the high-place work include: deinstalling an indoor unit of an air conditioner installed at a high place from an installed location, disassembling the deinstalled indoor unit, removing a heat exchanger from the inside of the indoor unit, and washing the removed heat exchanger; and applying a washing liquid onto a heat exchanger in a state in which an indoor unit of an air conditioner is installed at a high place for washing the heat exchanger. Since known air conditioners require high-place work during washing work of a heat exchanger, the heat exchanger could not be washed without a human hand. Furthermore, high-place work was extraordinarily difficult work particularly for elderly and disabled people. Thus, known air conditioners put a burden on the worker.

The present invention is intended to solve the above-described problems. A main object of the present invention is to provide an air conditioner which includes a heat exchanger having improved maintenance properties.

### SOLUTIONS TO THE PROBLEMS

The above cited problem is solved by the appended claims.

### EFFECTS OF THE INVENTION

According to the present invention, the heat exchanger can have improved maintenance properties.

### BRIEF DESCRIPTION OF THE DRAWINGS

Fig. 1 is a configuration diagram of an air conditioner according to an embodiment.
Fig. 2 is a vertical cross-sectional view of an indoor unit of an air conditioner according to an embodiment.
Fig. 3 is a schematic view of a heat exchanger incorporated in an indoor unit according to an embodiment.
Fig. 4 is a schematic view illustrating mounting angles of a heat exchanger incorporated in an indoor unit according to an embodiment.
Fig. 5A is a schematic view (1) of a burring hole (opening) of an uneven portion formed to a fin according to an embodiment.
Fig. 5B is a schematic view (2) of a burring hole (opening) as an example of an uneven portion formed to a fin according to an embodiment.
Fig. 6A is a schematic view (1) illustrating an uneven portion formed to a fin according to an embodiment.
Fig. 6B is a schematic view (2) illustrating an example of an uneven portion formed to a fin according to an embodiment.
Fig. 6C is a schematic view (3) illustrating an example of an uneven portion formed to a fin according to an embodiment.
Fig. 7A is a schematic view (1) of a fin including a cut and raised portion as an uneven portion according to an embodiment.
Fig. 7B is a schematic view (2) of a fin including a cut and raised portion as an uneven portion according to an embodiment.
Fig. 7C is a schematic view (3) of a fin including a cut and raised portion as an uneven portion according to an embodiment.
Fig. 7D is a schematic view (4) of a fin including a cut and raised portion as an uneven portion according to an embodiment.
Fig. 8 is a schematic diagram illustrating an example of hydrophilic treatment.
Fig. 9A is an illustrative diagram (1) of an operation of hydrophilic treatment.
Fig. 9B is an illustrative diagram (2) of an operation of hydrophilic treatment.

### DESCRIPTION OF EMBODIMENTS

The following examples 6B, 6C, 7A-7D are not according to the invention and are present for illustration purposes only.

An embodiment (hereinafter, referred to as "the present embodiment") of the present invention will be described in detail below with reference to the drawings. It is noted that the drawings are only schematically illustrated to a degree that allows the present invention to be sufficiently understood. Therefore, the present invention is not limited to the illustrated examples but to the scope of the appending claims. Also, common or similar constituents are assigned with the same sign, and redundant descriptions thereof will be omitted.

### [Embodiments]

### <Configuration of air conditioner>

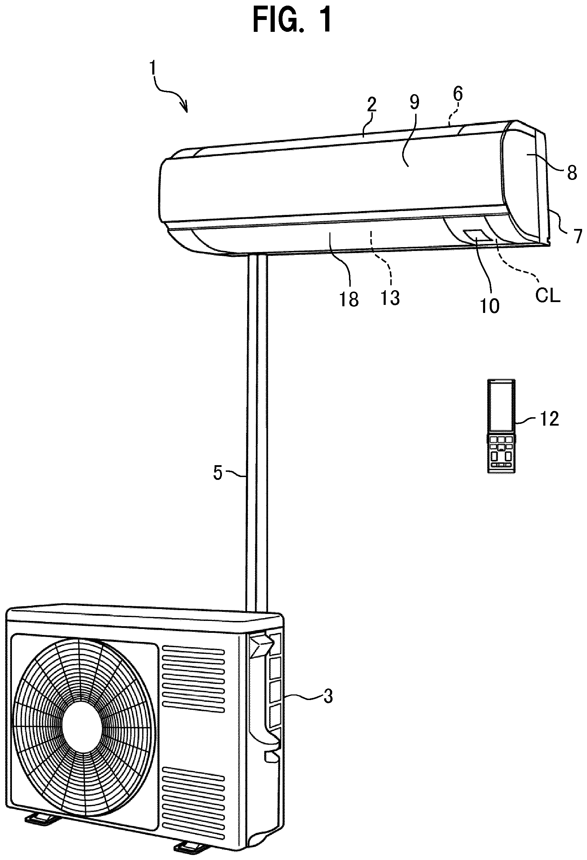

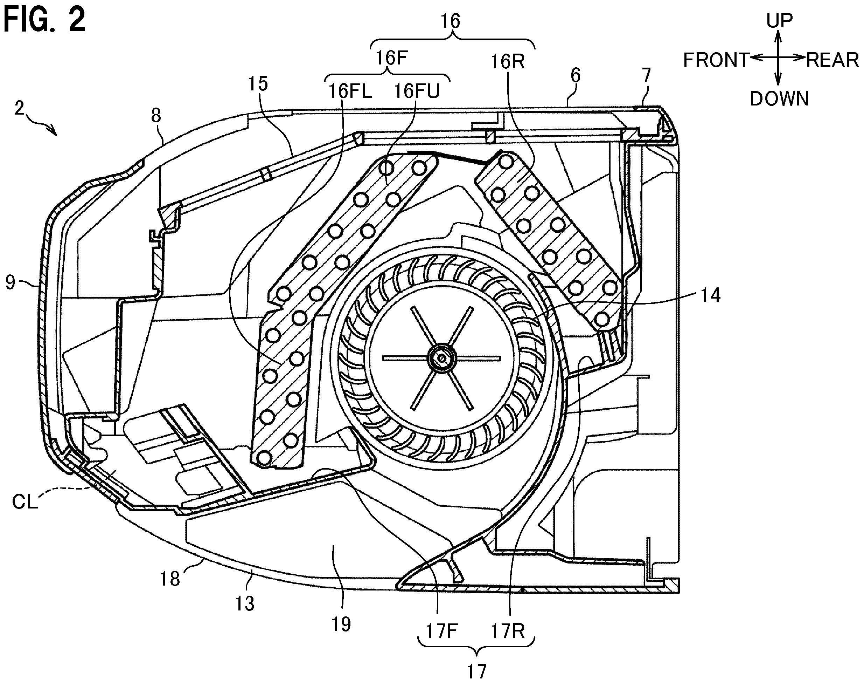

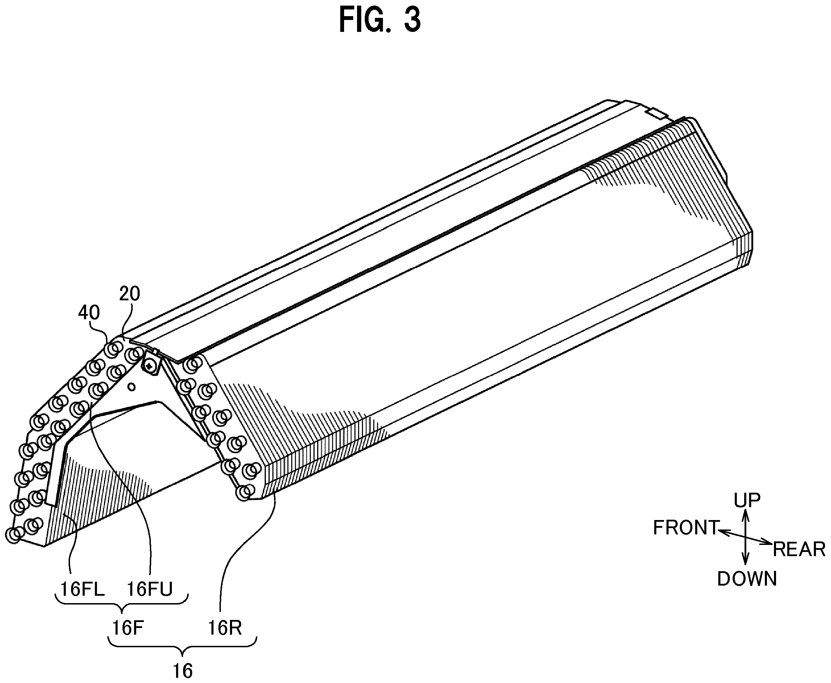

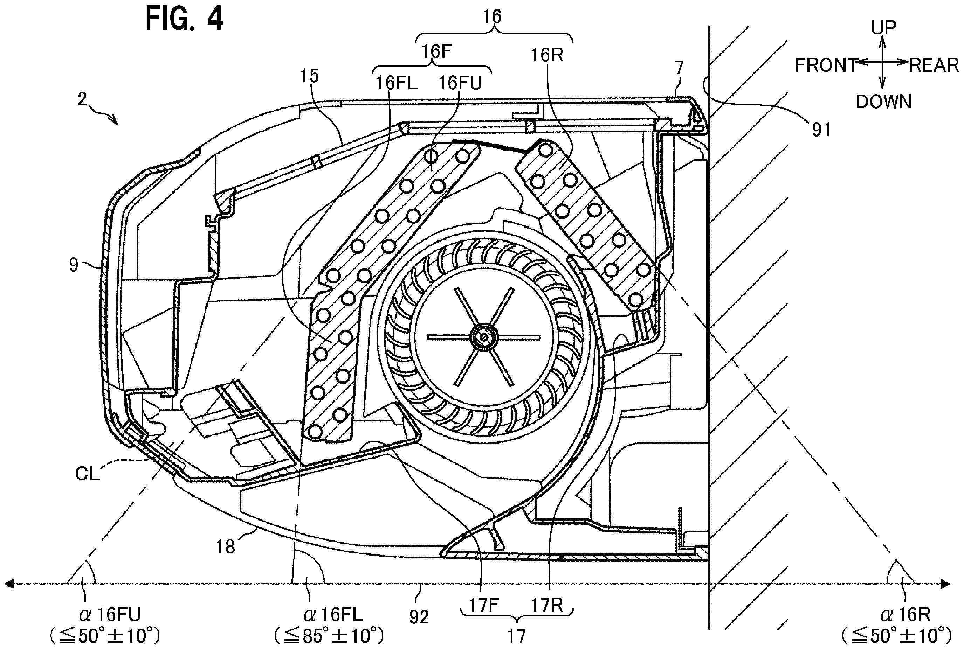

Hereinafter, a configuration of an air conditioner 1 according to the present embodiment will be described with reference to Fig. 1 to Fig. 3. Fig. 1 is a configuration diagram of the air conditioner 1 according to the present embodiment. Fig. 2 is a vertical cross-sectional view of an indoor unit 2 of the air conditioner 1. Fig. 3 is a schematic view illustrating mounting angles of a heat exchanger 16 incorporated in the indoor unit 2. Fig. 4 is a schematic view illustrating mounting angles of the heat exchanger 16.

As illustrated in Fig. 1, the air conditioner 1 includes the indoor unit 2 placed in a room, an outdoor unit 3 placed outside a room, and a remote controller 12 placed at hand for a user in a room.

The indoor unit 2 conditions the air in a room by sucking indoor air into the indoor unit 2, allowing the sucked indoor air to pass through the heat exchanger 16 (see Fig. 2) to obtain conditioned air having been subjected to any optional treatment of heating, cooling, and dehumidifying, and blowing the obtained conditioned air into the room. The indoor unit 2 is connected with the outdoor unit 3 via connection piping 5, and circulates a refrigerant between the indoor unit 2 and the outdoor unit 3. The outdoor unit 3 exchanges heat with the circulated refrigerant.

In the indoor unit 2, structures such as a blowing fan 14 (see Fig. 2) and the heat exchanger 16 (see Fig. 2) are contained in a casing 7 and a decorative frame 8. The blowing fan 14 is a cross-flow fan which sends air from the side of an air suction port 6 to the side of an air blowout outlet 13. The heat exchanger 16 is a unit which exchanges heat with a refrigerant.

In the example illustrated in Fig. 1, the front surface of the decorative frame 8 has a shape including an upper-side portion extending vertically and a lower-side portion having a lower side extending obliquely backward. A front panel 9 is mounted to the upper-side portion of the front surface of the decorative frame 8. The front panel 9 is a member which covers the front surface of the indoor unit 2. Also, a receiver 10 and a vertical air deflector 18 are mounted to the lower-side portion of the front surface of the decorative frame 8.

The receiver 10 is an apparatus which receives an operation signal transmitted from the remote controller 12. The receiver 10 is electrically connected to a controller CL which is integrated inside the indoor unit 2. The controller CL controls an operation action of the air conditioner 1 based on an operation signal from the remote controller 12 received via the receiver 10.

The vertical air deflector 18 is a member which defines the vertical orientation of conditioned air blown from the air blowout outlet 13. The vertical air deflector 18 is configured to be pivotally supported by the decorative frame 8 (or the casing 7) at the vicinity of the lower end such that the upper-side portion vertically opens and closes, and to be rotated by an unillustrated driver. In the indoor unit 2, the vertical air deflector 18 opens thereby to form the air blowout outlet 13.

As illustrated in Fig. 2, the indoor unit 2 internally includes, in addition to the blowing fan 14, the heat exchanger 16, and the vertical air deflector 18, a filter 15, a drain pan 17, and a horizontal air deflector 19.

The filter 15 is a member which prevents dust particles from intruding into the casing 7.

The drain pan 17 is a member which accepts water (water droplets) dropping after having been condensed as dew on the surfaces of fins 20 (see Fig. 3) of the heat exchanger 16.

The horizontal air deflector 19 is a member which defines the horizontal orientation of conditioned air blown from the air blowout outlet 13.

The filter 15 is placed in such a manner as to block between the air suction port 6 and the heat exchanger 16. The air conditioner 1 is configured to prevent dust particles larger than the mesh of the filter 15 from intruding into the casing 7 by the filter 15, and to wash away, by later-described frozen washing, dust particles finer than the mesh of the filter 15 which have passed through the mesh of the filter 15. The air conditioner 1 is preferably configured to have a filter cleaning mechanism (not illustrated) such that the filter 15 can be cleaned automatically (further preferably periodically) by the filter cleaning mechanism.

The blowing fan 14 is placed near a substantial center of the inside of the indoor unit 2, so as to enable sucking air from the air suction port 6 and blowing air from the air blowout outlet 13. The heat exchanger 16 is placed on the upstream side (on a side closer to the air suction port 6) of the blowing fan 14, and has a substantial inverted V shape in such a manner as to cover the upstream side of the blowing fan 14.

As illustrated in Fig. 3, the heat exchanger 16 includes a front heat exchanger 16F and a rear heat exchanger 16R. The front heat exchanger 16F and the rear heat exchanger 16R each contain a plurality of fins (heat exchange plates) 20 and a plurality of pipes 40 which extend through the fins 20. The fins 20 are plate-like long-length thin members for exchanging heat between a refrigerant and air. The fins 20 are constituted by, for example, aluminum alloy. The pipes 40 are members through which a refrigerant flows.

The front heat exchanger 16F has a thick plate-like shape which is bent downward near a substantial center. Therefore, the inclination angle of a lower part 16FL of the front heat exchanger 16F is larger than the inclination angle of an upper part 16FU of the front heat exchanger 16F. On the other hand, the rear heat exchanger 16R has a thick straight plate-like shape.

Hereinafter, the lower part 16FL and the upper part 16FU of the front heat exchanger 16F are sometimes referred to as the "front lower part 16FL of the heat exchanger 16" and the "front upper part 16FU of the heat exchanger 16" respectively. Also, the rear heat exchanger 16R is sometimes referred to as the "rear part 16R of the heat exchanger 16".

In such a configuration, the indoor unit 2 traps most of dust particles contained in indoor air sucked into the indoor unit 2 by the filter 15 (see Fig. 2). However, some of dust particles fail to be trapped by the filter 15, and intrude into the indoor unit 2 through the mesh of the filter 15 and adhere to the heat exchanger 16. When dust particles continuously adhere to the heat exchanger 16, bacteria (including mold) grow, which can cause the occurrence of an unpleasant odor. Therefore, the air conditioner 1 is preferably configured to remove dust particles adhering to the heat exchanger 16. To address this concern, in the present embodiment, the air conditioner 1 performs washing treatment as described below to the heat exchanger 16 by operation control.

That is, the air conditioner 1 performs an action (hereinafter, referred to as a "freezing action") of firstly performing an operation of lowering the temperature of the heat exchanger 16 to rapidly cool the heat exchanger 16 so that frost or ice adheres to the surfaces of the fins 20 (see Fig. 3) of the heat exchanger 16. In the present embodiment, the operation for performing the freezing action is referred to as a "freezing operation".

It is noted that in the freezing operation, frost (including ice) is considered to be a product which directly adheres to the surfaces of the fins 20 of the heat exchanger 16 as a result of the sublimation of moisture in air without undergoing a state of water droplets. However, moisture in air can be sometimes condensed as dew on the surfaces of the fins 20 of the heat exchanger 16, and the moisture condensed as dew is frozen. Thus, frost (ice) can adhere to the surfaces of the fins 20 of the heat exchanger 16 after undergoing a state of water droplets.

It is noted that in the freezing operation, the air conditioner 1 does not operate the blowing fan 14, unlike in a normal cooling operation. Accordingly, the air conditioner 1 can decrease the speed of the air passing through the heat exchanger 16 to facilitate the adhesion of frost (ice) onto the surfaces of the fins 20 (see Fig. 3) of the heat exchanger 16. Also, the air conditioner 1 can suppress the dropping (water drips) of water (dew condensation water) condensed as dew on the surfaces of the fins 20 (see Fig. 3) of the heat exchanger 16 to lengthen the retention time of the water (dew condensation water) on the surfaces of the fins 20. As a result, the air conditioner 1 can ensure a stable adhesion amount of frost (ice).

After the freezing operation, the air conditioner 1 performs an operation for increasing the temperature of the heat exchanger 16 to achieve an action (hereinafter, referred to as a "thawing action") of rapidly heating the heat exchanger 16 to thaw (melt) the frost (ice). In the present embodiment, the operation for performing the thawing action is referred to as a "thawing operation". The air conditioner 1 performs the thawing operation thereby to transform frost (ice) back into water. At that time, the air conditioner 1 utilizes the momentum of the dropping of thawed (melted) water to wash away fine dust particles adhering to the heat exchanger 16. Accordingly, the air conditioner 1 can improve the maintenance properties of the heat exchanger 16, and efficiently wash the heat exchanger 16. Hereinafter, this washing treatment (washing treatment performed by the freezing operation and the thawing operation) is referred to as "frozen washing".

It is noted that the air conditioner 1 accepts water flown out during the thawing operation into the drain pan 17. The drain pan 17 is connected to a drain pipe. The air conditioner 1 drains the water flown out via the drain pipe toward the outside of the casing 7.

The frozen washing performed by the air conditioner 1 can eliminate a conventional user's need to use a commercially available washing liquid for washing the heat exchanger 16 or to hire a cleaning company for washing the heat exchanger 16.

Also, the frozen washing performed by the air conditioner 1 can eliminate a conventional need for high-place work (for example, a high-place work of deinstalling the indoor unit 2 of the air conditioner 1 installed at a high place from an installed location, disassembling the deinstalled indoor unit, removing the heat exchanger 16 from the inside of the indoor unit 2, and washing the removed heat exchanger 16; or a high-place work of washing the heat exchanger 16 by applying a washing liquid onto the heat exchanger 16 in a state in which the indoor unit 2 of the air conditioner 1 is installed at a high place).

Thus, the air conditioner 1 can improve the maintenance properties of the heat exchanger 16.

### <Mounting angles of heat exchanger>

In order to efficiently wash the heat exchanger 16, the air conditioner 1 preferably increases the amount of water flown out during the frozen washing (that is, increases the adhesion amount of frost (ice) adhering to the surfaces of the fins 20 (see Fig. 3) of the heat exchanger 16).

In the air conditioner 1 according to the present embodiment, the mounting angles of the heat exchanger 16 are as described below, in order to increase the amount of water flown out during the frozen washing (that is, in order to increase the adhesion amount of frost (ice) adhering to the surfaces of the fins 20 (see Fig. 3) of the heat exchanger 16.

For example, as illustrated in Fig. 4, the indoor unit 2 of the air conditioner 1 is fixed to an installation wall surface 91. In the indoor unit 2, the mounting angles of the heat exchanger 16 are different at the front upper part (the upper part of the front heat exchanger) 16FU, the front lower part (the lower part of the front heat exchanger) 16FL, and the rear part (the rear heat exchanger) 16R. Specifically, a mounting angle α16FU at the front upper part 16FU of the heat exchanger 16, a mounting angle α16FL at the front lower part 16FL, and a mounting angle α16R at the rear part 16R, with respect to a normal line 92 of the installation wall surface 91, may be within 50° ± 10°, within 85° ± 10°, and within 50° ± 10°, respectively.

In such an air conditioner 1, the mounting angles at the front upper part 16FU and the rear part 16R are 40° or less. Accordingly, the air conditioner 1 can suppress the dropping (water drips) of water (dew condensation water) condensed as dew on the surfaces of the fins 20 (see Fig. 3) of the heat exchanger 16 to lengthen the retention time of the water (dew condensation water) on the surfaces of the fins 20. As a result, the air conditioner 1 can increase the adhesion amount of frost (ice). Accordingly, the air conditioner 1 can increase the amount of water flown out during the frozen washing, and efficiently wash the heat exchanger 16.

### <Configuration of uneven portion>

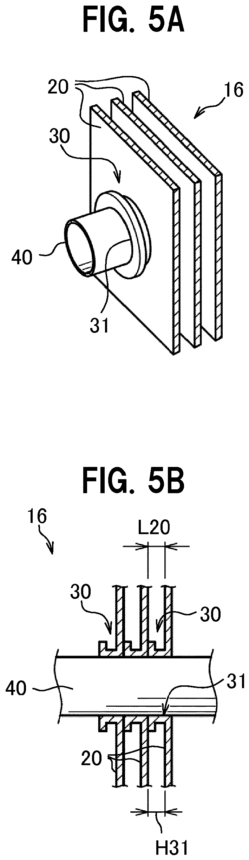

In order to prevent the dropping (water drips) from the air blowout outlet 13 of water flown out during the thawing operation, cooling operation, and dehumidifying operation, the air conditioner 1 may be configured to properly drop the water flown out onto the drain pan 17. To address this concern, in the present embodiment, there is disposed an uneven portion 30 (see Fig. 5A and Fig. 5B) which functions as a flow channel to guide the flow of water toward the fins 20. The uneven portion 30 is a site having an unevenly formed surface. Fig. 5A and Fig. 5B are schematic views of a burring hole (opening) 31 as an example of the uneven portion 30 formed to the fins 20. Fig. 5A is an upper perspective view of the burring hole (opening) 31, and Fig. 5B is a side view of the burring hole (opening) 31.

As illustrated in Fig. 5A and Fig. 5B, the fins 20 of the heat exchanger 16 include the burring hole (opening) 31 into which the pipe 40 is inserted. The burring hole (opening) 31 is a hole having an edge machined into a rising portion. A height H31 (see Fig. 5B) of the burring hole (opening) 31 is substantially the same as a fin interval L20 (see Fig. 5B). The heat exchanger 16 is assembled such that all of the fin intervals L20 are the same. The burring hole (opening) 31 constitutes a part of the uneven portion 30, and functions as a flow channel to guide the flow of water toward the drain pan 17.

When the uneven portion 30 as a flow channel to guide the flow of water is partly constituted by the burring hole (opening) 31, the air conditioner 1 can properly drop water flown out during the thawing operation, cooling operation, and dehumidifying operation onto the drain pan 17 to suppress the dropping (water drips) from the air blowout outlet 13 of the water.

Also, since the heat exchanger 16 can be assembled such that all of the fin intervals L20 are the same, the air conditioner 1 can ensure the same adhesion amount of frost (ice) between the fins 20, if the outside air temperature is the same. Therefore, the air conditioner 1 can ensure a stable adhesion amount of frost (ice).

It is noted that in the air conditioner 1, the fin intervals L20 (see Fig. 5B) may be set to a desired interval (for example, 5 mm or less, more preferably 1.5 mm or less). Accordingly, the air conditioner 1 can freeze water during the freezing operation in a state in which the water bridges between the fin 20 and the fin 20 of the heat exchanger 16. Therefore, the frozen water can be unlikely to drop. As a result, the air conditioner 1 can increase the adhesion amount of frost (ice) during the frozen washing (that is, can increase the amount of water flown out).

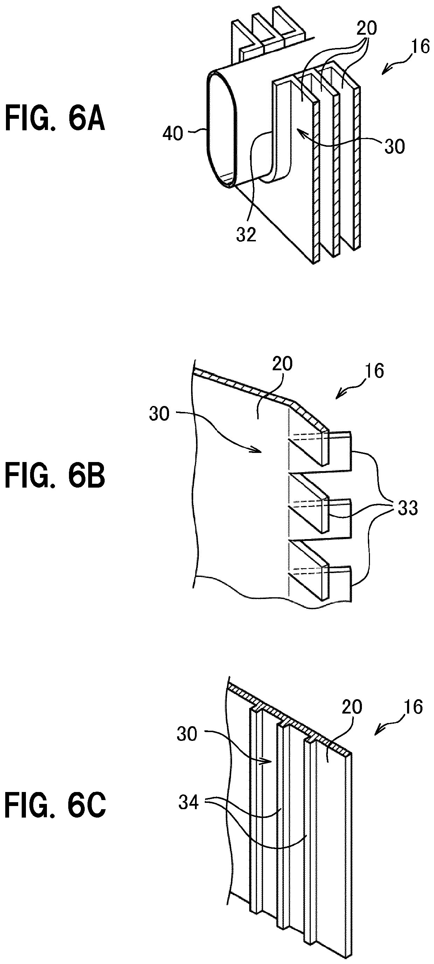

It is noted that the uneven portion 30 can also be formed by a configuration other than the burring hole (opening) 31 (see Fig. 6A to Fig. 6C). Fig. 6A, Fig. 6B, and Fig. 6C are schematic views illustrating an example of the uneven portion 30 formed to the fins 20. Fig. 6A illustrates an example of when the uneven portion 30 is formed by a long hole-like groove 32 machined into a rising portion. Fig. 6B illustrates an example of when the uneven portion 30 is formed by a cut and raised portion 33. Fig. 6C illustrates an example of when the uneven portion 30 is formed by ribs 34.

As illustrated in Fig. 6A, the uneven portion 30 is formed by the long hole-like groove 32 having an edge machined into a rising portion. In the example illustrated in Fig. 6A, the long hole-like groove 32 is formed at the end of each of the fins 20 in such a manner as to open in one direction. The pipes 40 have an elongated round rectangle shape, and are inserted into the long hole-like groove 32.

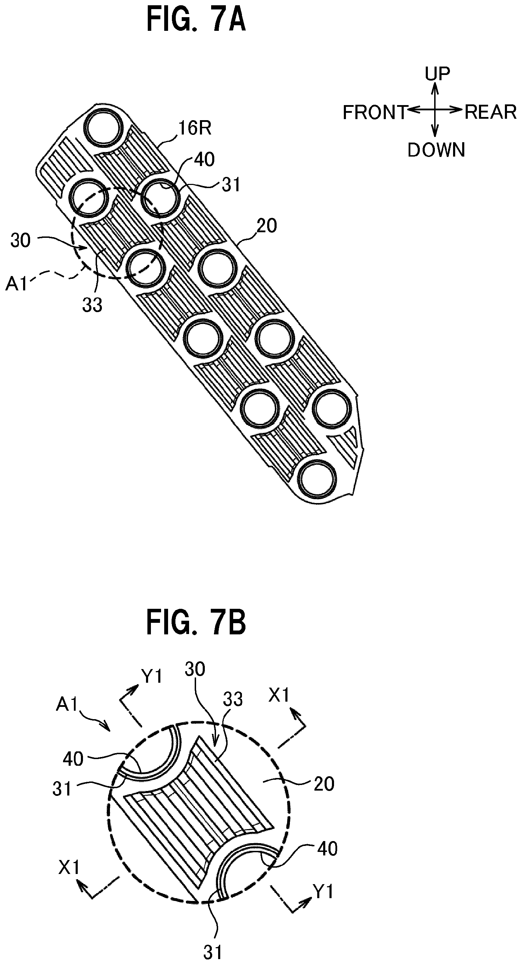

As illustrated in Fig. 6B, the uneven portion 30 is formed by the cut and raised portion 33. In the example illustrated in Fig. 6B, the cut and raised portion 33 is formed by forming a plurality of cuts on the surface or end of the fin 20 and folding the sites between the cuts in alternately different directions. It is noted that although the cut and raised portion 33 is formed at the end of the fin 20 in the example illustrated in Fig. 6B, the cut and raised portion 33 can also be formed on the surface of the fin 20 as illustrated in Fig. 7A to Fig. 7D.

As illustrated in Fig. 6C, the uneven portion 30 is formed by the plurality of ribs 34. In the example illustrated in Fig. 6C, the ribs 34 are formed in a projection-like shape on the surface of the fin 20 in such a manner as to extend in an optional direction (a vertical direction in the illustrated example).

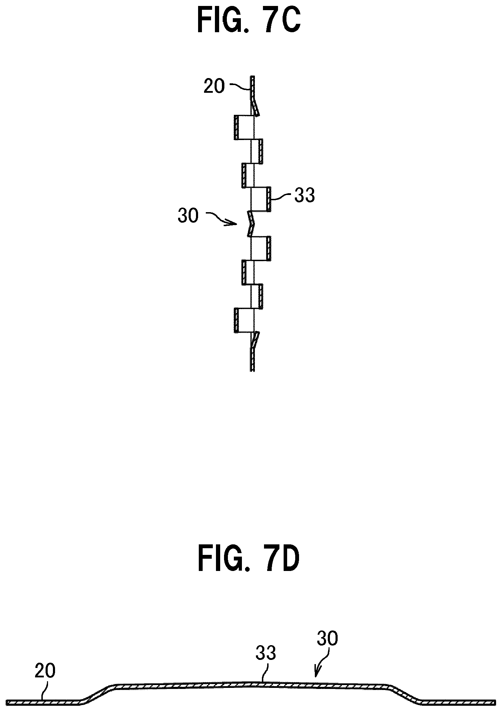

An example of the fin 20 including the cut and raised portion 33 as the uneven portion 30 is illustrated in Fig. 7A to Fig. 7D. Fig. 7A, Fig. 7B, Fig. 7C, and Fig. 7D are schematic views of the fin 20 including the cut and raised portion 33 as the uneven portion 30. Fig. 7A illustrates an entire schematic configuration of the fin 20; Fig. 7B illustrates an enlarged view of the A1 portion of Fig. 7A; Fig. 7C illustrates a configuration of a cross section of the cut and raised portion 33 cut along line X1-X1 of Fig. 7B; and Fig. 7D illustrates a configuration of a cross section of the cut and raised portion 33 cut along line Y1-Y1 of Fig. 7B. Here, the fin 20 of the rear heat exchanger 16R will be described as an example.

In the example illustrated in Fig. 7A, ten of the pipes 40 are placed in such a manner as to penetrate the fin 20, and the cut and raised portion 33 is formed between the pipes 40 of the fin 20. As illustrated in Fig. 7B to Fig. 7D, the cut and raised portion 33 is formed by, for example, forming a plurality of cuts along a desired direction on the surface of the fin 20 and folding the sites between the cuts in alternately different directions. In the example illustrated in Fig. 7B, the cut and raised portion 33 is formed such that the projection amount (folding height) is different among the sites.

The heat exchanger 16 (see Fig. 3) includes the fins 20 containing the cut and raised portion 33 as the uneven portion 30 on the surface. Accordingly, the contact area between the surfaces of the fins 20 and air can be enlarged. Therefore, with the use of such a heat exchanger 16, the air conditioner 1 can improve the heat transfer rate of the heat exchanger 16. As a result, the air conditioner 1 can achieve the downsizing of the heat exchanger 16.

It is noted that in the present embodiment, the heat exchanger 16 is intended to have a configuration in which a balance is struck between facilitating the retention of water on the surfaces of the fins 20 during the freezing operation to increase the adhesion amount of frost (ice) and facilitating the flowing of water thawed (melted) during the thawing operation. This is due to the following reasons.

That is, if the heat exchanger 16 of the indoor unit 2 of the air conditioner 1 does not maintain an optimum shape, water condensed as dew on the heat exchanger 16 drops on the blowing fan 14, and water flies from the air blowout outlet 13 into a room. This phenomenon is also described as a water splashing phenomenon.

For example, if the indoor unit 2 of the air conditioner 1 is designed to satisfy a condition of not disposing the heat exchanger 16 above the blowing fan 14 and a condition of accepting the dropping of water condensed as dew on the heat exchanger 16 by the drain pan 17 in order to prevent the occurrence of the water splashing phenomenon, such an indoor unit 2 comes to have a configuration which is increased in size toward a direction of the normal line 92 (see Fig. 4) of the installation wall surface 91. In this case, since the installation wall surface 91 (see Fig. 4) needs to support the indoor unit 2 with a cantilever structure, a load comes to be easily applied.

Also, for example, if the indoor unit 2 of the air conditioner 1 is designed to have a structure in which the heat exchanger 16 is unlikely to allow water to flow in order to prevent the occurrence of the water splashing phenomenon, such an indoor unit 2 comes to be unlikely to allow water thawed (melted) to flow during the thawing operation. That is, when the indoor unit 2 of the air conditioner 1 is simply configured to easily allow water thawed (melted) to flow during the thawing operation, the adhesion amount of frost (ice) decreases. Accordingly, in such an indoor unit 2, the washing performance of the heat exchanger 16 decreases. Also, in such an indoor unit 2, dust particles are retained on the surfaces of the fins 20 (see Fig. 3) together with the thawed (melted) water, thereby possibly causing the rusting of the fins 20 and the growth of bacteria (including mold) resulting in the occurrence of an unpleasant odor.

Conversely, if the indoor unit 2 of the air conditioner 1 is designed to have a structure in which the heat exchanger 16 easily flows water, such an indoor unit 2 cannot retain water condensed as dew on the surfaces of the fins 20 (see Fig. 3) during the freezing operation, and immediately drops the water. Accordingly, in such an indoor unit 2, water in an amount sufficient for the frozen washing cannot be ensured, thereby deteriorating the washing performance of the heat exchanger 16.

Therefore, in order to suppress the occurrence of these phenomena, the heat exchanger 16 according to the present embodiment has a configuration in which a balance is struck between facilitating the retention of water on the surfaces of the fins 20 (see Fig. 3) during the freezing operation to increase the adhesion amount of frost (ice) and facilitating the flowing of water thawed (melted) during the thawing operation, as described above.

Specifically, for example, in the example illustrated in Fig. 7A to Fig. 7D, the air conditioner 1 includes the cut and raised portion 33 as the uneven portion 30 formed on the fin 20, thereby partially increasing the resistance of the flow of water. Accordingly, the air conditioner 1 can strike a balance between facilitating the retention of water on the surfaces of the fins 20 during the freezing operation to increase the adhesion amount of frost (ice) and facilitating the flowing of water thawed (melted) during the thawing operation.

In addition, since the surface area of the fins 20 is enlarged by the cut and raised portion 33 formed on the fin 20, the air conditioner 1 can increase the adhesion amount of frost (ice). Accordingly, this also enables the air conditioner 1 to increase the amount of water flown out during the frozen washing and to efficiently wash the heat exchanger 16.

### <Example of hydrophilic treatment>

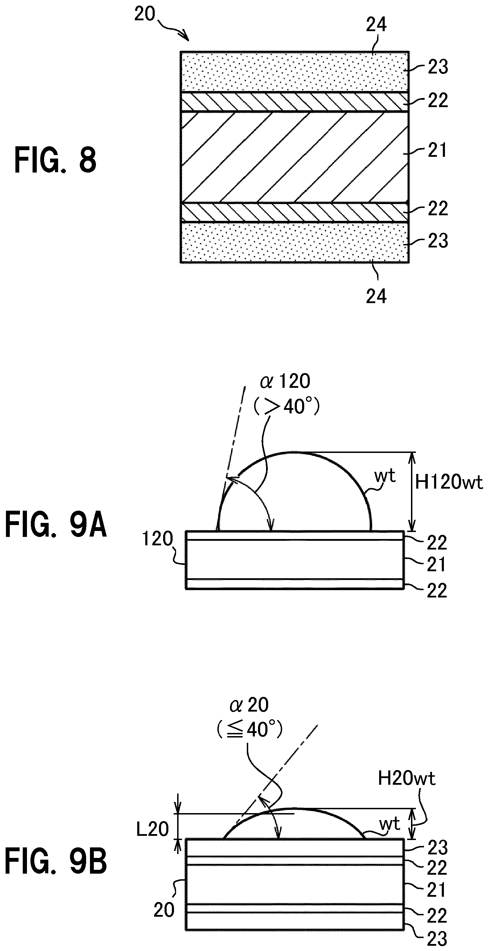

Also, in the present embodiment, the amount of water flown out by the frozen washing is increased, and furthermore, hydrophilic treatment is applied to the surfaces of the fins 20 for improving the antimicrobial performance and deodorizing performance of the heat exchanger 16 (see Fig. 8). Fig. 8 is a schematic diagram illustrating an example of the hydrophilic treatment.

As illustrated in Fig. 8, the fin 20 according to the present embodiment is configured to include a metal layer 21, a base treatment layer 22, and a hydrophilic treatment layer 23.

The metal layer 21 is constituted by, for example, aluminum alloy.

The base treatment layer 22 is constituted by, for example, a phosphate film, a chromate film, and the like.

The hydrophilic treatment layer 23 is constituted by a hydrophilic resin film.

The hydrophilic resin film constituting the hydrophilic treatment layer 23 is formed with a resin material containing an additive 24 having an antimicrobial effect and a deodorizing effect. Examples of the resin material to be used may include an epoxy-based resin material and a silicon-based resin material. Also, examples of the additive 24 to be used may include any one or more of titanium, fluorine, and zinc pyrithione. It is noted that zinc pyrithione is one of pyridine derivatives, and an organic zinc complex represented by chemical formula C₁₀H₈N₂O₂S₂Zn.

Hereinafter, with reference to Fig. 9A and Fig. 9B, an operation and effect of the hydrophilic treatment will be described. Fig. 9A and Fig. 9B are illustrative diagrams of an operation of the hydrophilic treatment. Fig. 9A illustrates a swelling height H120wt of a water droplet wt adhering to a fin 120 according to a comparative example. The fin 120 according to a comparative example is a fin which has not been subjected to the hydrophilic treatment (hereinafter, referred to as a "non-hydrophilic fin"). On the other hand, Fig. 9B illustrates a swelling height H20wt of a water droplet wt adhering to the fin 20 according to the present embodiment. The fin 20 according to the present embodiment is a fin which has been subjected to the hydrophilic treatment (hereinafter, referred to as a "hydrophilic fin").

As illustrated in Fig. 9A, a swelling angle α120 at the edge portion of the water droplet wt adhering to the non-hydrophilic fin 120 according to a comparative example with respect to the surface of the fin 120 is, for example, a value larger than 40°. Furthermore, the water droplet wt adhering to the non-hydrophilic fin 120 according to a comparative example is in a state of swelling with the swelling height H120wt which is relatively large.

On the contrary, as illustrated in Fig. 9B, a swelling angle α20 at the edge portion of the water droplet wt adhering to the hydrophilic fin 20 according to the present embodiment with respect to the surface of the fin 20 is, for example, a value not more than 40°. Furthermore, the water droplet wt adhering to the hydrophilic fin 20 according to the present embodiment extends in a horizontal direction compared to when adhering to the non-hydrophilic fin 120 according to a comparative example. Accordingly, the water droplet wt adhering to the hydrophilic fin 20 according to the present embodiment swells only with the swelling height H20wt which is smaller than the swelling height H120wt when adhering to the non-hydrophilic fin 120 according to a comparative example.

It is noted that the fin interval L20 may be a value equivalent to or somewhat smaller than the swelling height H20wt. Accordingly, the air conditioner 1 can freeze water during the freezing operation in a state in which the water bridges between the fin 20 and the fin 20 of the heat exchanger 16. Therefore, the frozen water can be unlikely to drop. As a result, the air conditioner 1 can increase the adhesion amount of frost (ice) during the frozen washing (that is, can increase the amount of water flown out).

When such hydrophilic fins 20 having a surface subjected to the hydrophilic treatment are used as the heat exchanger 16, the air conditioner 1 can increase the amount of water retained in the fins 20. This enables the air conditioner 1 to increase the adhesion amount of frost (ice). Accordingly, the air conditioner 1 can increase the amount of water flown out during the frozen washing, and can efficiently wash the heat exchanger 16. In addition, since the hydrophilic treatment layer 23 of the fin 20 contains the additive 24 having antimicrobial performance and deodorizing performance, the air conditioner 1 can improve the antimicrobial performance and deodorizing performance of the heat exchanger 16. Accordingly, the air conditioner 1 can efficiently wash the heat exchanger 16 only by the frozen washing. Such an air conditioner 1 can achieve the heat exchanger 16 which is maintenance free for a long period of time.

It is noted that the hydrophilic treatment can also be applied to the surfaces of the pipes 40 disposed to the heat exchanger 16.

### <Main characteristics of air conditioner>

(1) The air conditioner 1 includes the controller CL (see Fig. 1) which performs an operation for decreasing the temperature of the heat exchanger 16 to control a freezing action of condensing water as dew on the surfaces of the fins 20 and freezing the water (dew condensation water) as frost (ice). The controller CL (see Fig. 1) also performs an operation for increasing the temperature of the heat exchanger 16 to control a thawing action of thawing (melting) the frost (ice). Furthermore, the air conditioner 1 includes the plurality of fins 20 (see Fig. 3 and Fig. 8) having a surface subjected to the hydrophilic treatment.

The air conditioner 1 performs an operation for increasing the temperature of the heat exchanger 16 so that frost (ice) is attached to the surfaces of the fins 20. Thereafter, the air conditioner 1 performs an operation of decreasing the temperature of the heat exchanger 16 so that the frost (ice) is thawed (melted) back into water. At that time, the air conditioner 1 utilizes the momentum of the dropping of the thawed (melted) water so that fine dust particles adhering to the heat exchanger 16 are washed away. In this manner, the air conditioner 1 washes the heat exchanger 16.

Since the surfaces of the fins 20 are subjected to the hydrophilic treatment, such an air conditioner 1 can ensure water in an amount sufficient for the frozen washing. Then, the air conditioner 1 can utilize the momentum of the dropping of the ensured water in a sufficient amount to wash away dust particles adhering to the heat exchanger 16, thereby enabling the improvement of the maintenance properties of the heat exchanger 16 and the efficient washing of the heat exchanger 16.

It is noted that there was a technology of covering the surface of a smelling object with a film containing a component having an antimicrobial effect for deodorization. However, the technology is a technology which is irrelevant to the frozen washing, and was not intended to ensure water in an amount sufficient for the frozen washing.

(2) As illustrated in Fig. 4, the mounting angles of the heat exchanger 16 are different at the front upper part (the upper part of the front heat exchanger) 16FU, the front lower part (the lower part of the front heat exchanger) 16FL, and the rear part (the rear heat exchanger) 16R. The mounting angle α16FU at the front upper part 16FU of the heat exchanger 16, the mounting angle α16FL at the front lower part 16FL, and the mounting angle α16R at the rear part 16R, with respect to the normal line 92 of the installation wall surface 91, may be within 50° ± 10°, within 85° ± 10°, and within 50° ± 10°, respectively.

In such an air conditioner 1, the mounting angles at the front upper part (the upper part of the front heat exchanger) 16FU and the rear part (the rear heat exchanger) 16R can be 40° or less. Accordingly, the air conditioner 1 can suppress the dropping (water drips) of water (dew condensation water) condensed as dew on the surfaces of the fins 20 of the heat exchanger 16 to lengthen the retention time of water (dew condensation water) on the surfaces of the fins 20. As a result, the air conditioner 1 can increase the adhesion amount of frost (ice). Accordingly, the air conditioner 1 can increase the amount of water flown out during the frozen washing, and can efficiently wash the heat exchanger 16.

(3) As illustrated in Fig. 9A and Fig. 9B, when the interval between the neighboring fins 20 (that is, the fin interval L20 (see Fig. 9B)) is compared with the swelling height H120wt (see Fig. 9A) of water (dew condensation water) condensed as dew on the surface of the fin 20 in a state in which the hydrophilic treatment has not been performed, it may be shorter than the swelling height H120wt of the water (dew condensation water).

Such an air conditioner 1 can freeze water during the freezing operation in a state in which the water bridges between the fin 20 and the fin 20 of the heat exchanger 16. Therefore, the frozen water can be unlikely to drop. As a result, the air conditioner 1 can increase the adhesion amount of frost (ice) during the frozen washing (that is, can increase the amount of water flown out).

(4) As illustrated in Fig. 5A to Fig. 7D, the surfaces of the fins 20 include the uneven portion 30 to function as a flow channel of water. The uneven portion 30 is formed by the burring hole (opening) 31, the long hole-like groove 32 machined into a rising portion, the cut and raised portion 33, the ribs 34, and the like.

Such an air conditioner 1 can enlarge a contact area between the surfaces of the fins 20 and air by the uneven portion 30. Accordingly, the air conditioner 1 can improve the heat transfer rate of the heat exchanger 16. As a result, the air conditioner 1 can achieve the downsizing of the heat exchanger 16.

Also, the air conditioner 1 can partially increase the resistance of the flow of water by the uneven portion 30. Accordingly, the air conditioner 1 can strike a balance between facilitating the retention of water on the surfaces of the fins 20 during the freezing operation to increase the adhesion amount of frost (ice) and facilitating the flowing of water thawed (melted) during the thawing operation.

In addition, since the surface area of the fins 20 is enlarged by the uneven portion 30, the air conditioner 1 can increase the adhesion amount of frost (ice). This also enables the air conditioner 1 to increase the amount of water flown out during the frozen washing and to efficiently wash the heat exchanger 16.

(5) As illustrated in Fig. 5A and Fig. 5B, when the uneven portion 30 is formed by the burring hole (opening) 31, the height H31 (see Fig. 5B) of the burring hole (opening) 31 may be substantially the same as the interval between the neighboring fins 20 (that is, the fin interval L20 (see Fig. 5B)).

Since the heat exchanger 16 can be assembled such that all of the fin intervals L20 are the same, the air conditioner 1 can ensure the same adhesion amount of frost (ice) among the fins 20, if the outside air temperature is the same. Therefore, the air conditioner 1 can ensure a stable adhesion amount of frost (ice).

(6) As illustrated in Fig. 8, the hydrophilic treatment is achieved by covering the surface of the fin 20 with a hydrophilic resin film (the hydrophilic treatment layer 23). The hydrophilic resin film (hydrophilic treatment layer 23) is formed with a resin material containing an additive having an antimicrobial effect and a deodorizing effect. Examples of the additive to be used may include any one or more of titanium, fluorine, and zinc pyrithione. The hydrophilic treatment may also be applied to the surfaces of the pipes 40 disposed to the heat exchanger 16.

Such an air conditioner 1 can increase the amount of water retained in the fin 20. This enables the air conditioner 1 to increase the adhesion amount of frost (ice). Accordingly, the air conditioner 1 can increase the amount of water flown out during the frozen washing, and can efficiently wash the heat exchanger 16.

In addition, since the hydrophilic treatment layer 23 of the fin 20 contains the additive 24 having antimicrobial performance and deodorizing performance, the air conditioner 1 can improve the antimicrobial performance and deodorizing performance of the heat exchanger 16. Accordingly, the air conditioner 1 can efficiently wash the heat exchanger 16 only by the frozen washing. Such an air conditioner 1 can achieve the heat exchanger 16 which is maintenance free for a long period of time.

As described above, according to the air conditioner 1 of the present embodiment, the maintenance properties of the heat exchanger 16 can be improved.

The present invention is not limited to the above-described embodiment, and includes a variety of variations. For example, the above-described embodiment has been described in detail for facilitating the understanding of the present invention, and the present invention is not necessarily limited to an embodiment including all of the described configurations. Also, some of the configurations of the embodiment can be substituted with another configuration, and another configuration can be added to the configurations of the embodiment. Also, some of the configurations can be deleted, or added or substituted with other configurations.

For example, although configurations in which the present invention is applied to the indoor unit 2 have been described in the above-described embodiment, the present invention can be applied to the outdoor unit 3.

### DESCRIPTION OF REFERENCE SIGNS

- 1: air conditioner
- 2: indoor unit
- 3: outdoor unit
- 5: connection piping
- 6: air suction port
- 7: casing
- 8: decorative frame
- 9: front panel
- 10: receiver
- 12: remote controller
- 13: air blowout outlet
- 14: blowing fan
- 15: filter
- 16: heat exchanger
- 16F: front heat exchanger
- 16FL: lower part of front heat exchanger (front lower part of heat exchanger)
- 16FU: upper part of front heat exchanger (front upper part of heat exchanger)
- 16R: rear heat exchanger (rear part of heat exchanger)
- 17 (17F, 17R): drain pan
- 18: vertical air deflector
- 19: horizontal air deflector
- 20: fin
- 21: metal layer (aluminum alloy)
- 22: base treatment layer (such as phosphate film, chromate film)
- 23: hydrophilic treatment layer (hydrophilic resin film)
- 24: additive (such as titanium, fluorine, zinc pyrithione)
- 30: uneven portion
- 31: burring hole (opening)
- 32: long hole-like groove machined into rising portion
- 33: cut and raised portion
- 34: rib
- 40: pipe
- 91: installation wall surface
- 92: normal line of installation wall surface
- CL: controller
- H31: height of burring hole (opening)
- H20wt: swelling height of water
- L20: fin interval
- wt: water
- α16FL: mounting angle at front lower part of heat exchanger (lower part of front heat exchanger)
- α16FU: mounting angle at front upper part of heat exchanger (upper part of front heat exchanger)
- α16R: mounting angle at rear part of heat exchanger (rear heat exchanger)

## Claims

1. An air conditioner (1) comprising:
a heat exchanger (16) configured to exchange heat between air and a refrigerant; and
a plurality of fins (20) which is disposed to the heat exchanger (16);
the fins (20) have a surface subjected to hydrophilic treatment,
wherein the surfaces of the fins (20) include an uneven portion (30) formed by the burring hole (31) which functions as a flow channel of water through which a pipe (40) is inserted, the pipe (40) in the burring hole (31) allowing a refrigerant to flow through, and
the burring hole (31) is a hole having an edge machined into a rising portion, and
the edge has a height (H31) which is substantially identical to an interval (L20) between the neighboring fins (20),
the air conditioner (1) **characterized by** further comprising:
a controller (CL) configured to perform a washing operation by performing an operation for decreasing a temperature of the heat exchanger (16) to control a freezing action of attaching frost or ice onto the surfaces of the fins (20) and by performing, subsequently, an operation for increasing a temperature of the heat exchanger (16) to control a thawing action of thawing the frost or ice, wherein mounting angles at a front upper part, a mounting angle at the front lower part, and a rear part of the heat exchanger with respect to a normal line of an installation wall surface are within 50° ± 10°, within 85° ± 10°, and within 50° ± 10°, respectively.

2. The air conditioner (1) according to claim 1, wherein
the interval (L20) between the neighboring fins (20), when compared with a swelling height of water condensed as dew on the surfaces of the fins (20) in a state in which the hydrophilic treatment is not performed, is shorter than the swelling height of the water.

3. The air conditioner (1) according to any of claim 1 to claim 2,
wherein the uneven portion (30) is formed by a long hole-like groove machined into a rising portion (32) into which a pipe (40) for flowing a refrigerant is inserted.

4. The air conditioner (1) according to any of claim 1 to claim 2,
wherein the uneven portion (30) is formed by a cut and raised portion or a rib.

5. The air conditioner (1) according to any one of claim 1 to claim 4, wherein
the hydrophilic treatment is a treatment of covering the surfaces of the fins (20) with a hydrophilic resin film (23), and
the hydrophilic resin film (23) is formed with a resin material containing an additive having an antimicrobial effect.

6. The air conditioner (1) according to claim 5,
wherein any one or more of titanium, fluorine, and zinc pyrithione are used as the additive.

7. The air conditioner (1) according to claim 2 or claim 5, wherein
the hydrophilic treatment is also applied to a surface of the pipe (40) disposed to the heat exchanger (16).

## Patentansprüche

1. Klimaanlage (1), die Folgendes umfasst:
einen Wärmetauscher (16), der konfiguriert ist, Wärme zwischen Luft und einem Kühlmittel auszutauschen; und
mehrere Rippen (20), die am Wärmetauscher (16) angeordnet sind;
wobei die Rippen (20) eine Oberfläche aufweisen, die einer hydrophilen Behandlung unterzogen worden ist,
wobei die Oberflächen der Rippen (20) einen unebenen Abschnitt (30) enthalten, der durch das Gratloch (31) gebildet wird, das als ein Strömungskanal für Wasser fungiert, durch das ein Rohr (40) eingesetzt ist, wobei das Rohr (40) im Gratloch (31) ermöglicht, dass ein Kühlmittel hindurchströmt, und
das Gratloch (31) ein Loch ist, das eine Kante aufweist, die maschinell in einen erhabenen Abschnitt bearbeitet worden ist, und
die Kante eine Höhe (H31) aufweist, die im Wesentlichen gleich einem Abstand (L20) zwischen den benachbarten Rippen (20) ist,
wobei die Klimaanlage (1) **dadurch gekennzeichnet ist, dass** sie ferner Folgendes umfasst:
eine Steuereinheit (CL), die konfiguriert ist, einen Waschvorgang durchzuführen, indem ein Vorgang zum Absenken einer Temperatur des Wärmetauschers (16) durchgeführt wird, um eine Gefrieraktion des Anhaftens von Reif oder Eis auf den Oberflächen der Rippen (20) zu steuern, und indem anschließend ein Vorgang zum Erhöhen einer Temperatur des Wärmetauschers (16) durchgeführt wird, um eine Abtauaktion des Abtauens des Reifs oder des Eises zu steuern, wobei
die Montagewinkel an einer vorderen, oberen Komponente, ein Montagewinkel an der vorderen, unteren Komponente und einer rückwärtigen Komponente des Wärmetauschers in Bezug auf eine Normalenlinie einer Installationswandfläche im Bereich von 50° ± 10° bzw. im Bereich von 85° ± 10° bzw. im Bereich von 50° ±10 ° liegen.

2. Klimaanlage (1) nach Anspruch 1, wobei
ein Abstand (L20) zwischen den benachbarten Rippen (20) im Vergleich zu einer Anschwellhöhe von Wasser, das als Tau auf den Oberflächen der Rippen (20) kondensiert, in einem Zustand, in dem die hydrophile Behandlung nicht durchgeführt wird, kleiner als die Anschwellhöhe des Wassers ist.

3. Klimaanlage (1) nach einem der Ansprüche 1 bis 2,
wobei der unebene Abschnitt (30) durch eine langlochartige Fuge gebildet ist, die in einen erhabenen Abschnitt (32) maschinell eingearbeitet worden ist, in die ein Rohr (40) zum Hindurchströmen eines Kühlmittels eingesetzt ist.

4. Klimaanlage (1) nach einem der Ansprüche 1 bis 2,
wobei der unebene Abschnitt (30) durch einen geschnittenen und angehobenen Abschnitt oder eine Rippe gebildet ist.

5. Klimaanlage (1) nach einem der Ansprüche 1 bis 4, wobei
die hydrophile Behandlung eine Behandlung des Abdeckens der Oberflächen der Rippen (20) mit einem hydrophilen Harzfilm (23) ist, und
der hydrophile Harzfilm (23) mit einem Harzmaterial gebildet wird, das einen Zusatz mit einer antimikrobiellen Wirkung enthält.

6. Klimaanlage (1) nach Anspruch 5,
wobei Titan und/oder Fluor und/oder Zinkpyrithion als der Zusatz verwendet werden.

7. Klimaanlage (1) nach Anspruch 2 oder Anspruch 5, wobei
die hydrophile Behandlung außerdem auf eine Oberfläche des Rohrs (40) angewendet wird, das am Wärmetauscher (16) angeordnet ist.

## Revendications

1. Appareil de conditionnement d'air (1) comprenant :
un échangeur de chaleur (16) configuré pour assurer un échange de chaleur entre de l'air et un réfrigérant ; et
une pluralité d'ailettes (20) qui sont disposées sur l'échangeur de chaleur (16) ;
les ailettes (20) ont une surface soumise à un traitement hydrophile,
dans lequel les surfaces des ailettes (20) incluent une portion irrégulière (30) formée par le trou d'ébavurage (31) qui fonctionne comme un canal d'écoulement d'eau à travers lequel un tube (40) est inséré, le tube (40) dans le trou d'ébavurage (31) permettant à un réfrigérant de s'écouler à travers lui, et
le trou d'ébavurage (31) est un trou ayant un bord usiné pour donner une portion dressée, et
le bord a une hauteur (H31) qui est sensiblement identique à un intervalle (L20) entre les ailettes voisines (20),
l'appareil de conditionnement d'air (1) étant **caractérisé en ce qu'**il comprend en outre :
un contrôleur (CL) configuré pour effectuer une opération de lavage en effectuant une opération consistant à diminuer une température de l'échangeur de chaleur (16) pour commander une action de congélation consistant à fixer du gel ou de la glace sur les surfaces des ailettes (20) et
en effectuant, par la suite, une opération consistant à augmenter une température de l'échangeur de chaleur (16) pour commander une action de décongélation consistant à décongeler le gel ou la glace, dans lequel des angles de montage au niveau d'une partie supérieure avant, un angle de montage au niveau de la partie inférieure avant, et une partie arrière de l'échangeur de chaleur par rapport à une ligne normale d'une surface de paroi d'installation sont dans des plages de 50° ± 10°, de 85°± 10°, et de 50° ± 10°, respectivement.

2. Appareil de conditionnement d'air (1) selon la revendication 1, dans lequel l'intervalle (L20) entre les ailettes voisines (20), quand il est comparé à une hauteur de gonflement d'eau condensée sous forme de rosée sur les surfaces des ailettes (20) dans un état dans lequel le traitement hydrophile n'est pas effectué, est plus petit que la hauteur de gonflement de l'eau.

3. Appareil de conditionnement d'air (1) selon l'une quelconque des revendication 1 à 2,
dans lequel la portion irrégulière (30) est formée par une rainure similaire à un trou oblong usinée pour donner une portion dressée (32) à l'intérieur de laquelle un tube (40) destiné à faire s'écouler un réfrigérant est inséré.

4. Appareil de conditionnement d'air (1) selon l'une quelconque des revendications 1 à 2,
dans lequel la portion irrégulière (30) est formée par une portion découpée et relevée ou par une nervure.

5. Appareil de conditionnement d'air (1) selon l'une quelconque des revendications 1 à 4, dans lequel
le traitement hydrophile et un traitement consistant à couvrir les surfaces des ailettes (20) avec un film en résine hydrophile (23), et
le film en résine hydrophile (23) est formé avec un matériau résineux contenant un additif ayant un effet antimicrobien.

6. Appareil de conditionnement d'air (1) selon la revendication 5,
dans lequel l'un quelconque ou plusieurs des éléments parmi titane, fluor et pyrithione de zinc sont utilisés à titre d'additif.

7. Appareil de conditionnement d'air (1) selon la revendication 2 ou 5, dans lequel
le traitement hydrophile est également appliqué à une surface du tube (40) disposé sur l'échangeur de chaleur (16).
